# EUROPEAN PATENT APPLICATION

(11) **EP 0 875 841 A2**
(43) Date of publication of application: **04.11.1998**
(21) Application number: 98107519.5
(22) Date of filing: 24.04.1998
(51) Int. Cl.: G06F 17/30

(54) **System and method for secure and scalable database transactions over a network**

(30) Priority: 29.04.1997 US 848299
(71) Applicant: AT&T Corp., New York, NY 10013-2412 (US)
(72) Inventor: Silverman, Vladimir, Palo Alto, California 94306 (US)
(74) Representative: Modiano, Guido, Dr.-Ing.

(57) **Abstract**

A secure and scalable system and method is described for carrying out database transactions over a network. A transaction server on a network authenticates a user connected to the network with a client. The database access permission of the user is determined, and the transaction server sends a graphical user interface that comports with the access permission of the user to the client. The transaction server receives a user database request from the client based upon inputs provided by the user through the graphical user interface. The transaction server selects an action statement with formal parameters based upon the user database request. The action statement is evaluated by replacing its formal parameters with values from the user database request. The evaluated action statement is executed on a database, and the results are sent to the client, where they are displayed to the user through the graphical user interface.

## Description

### BACKGROUND OF THE INVENTION

The present invention relates to a system and method for secure and scalable database transactions over a network.

Systems for mediating access to a database over a network are known. Generally, such systems consist of at least one client and a server both connected to the network. The server is connected to a database. The server can execute database server software (including a database search engine) and be connected to the database directly, or can be connected to the database through a database gateway and/or a database server. As used herein, a client is a computer capable of communicating with a server over the network. A server is a computer capable of communicating with a client over the network. A computer includes a processor, computer readable memory, and a port to be connected to a network. A computer can further include other ports (e.g., ports to be connected to input devices, output devices, and databases).

In some known systems, access to a database is restricted to a certain set of users. The information stored on the database may be proprietary, private, and/or secret. Moreover, it may be desirable to limit the access of these users to only some of the information stored on the database. For example, the access to a database containing retail product information may be restricted to retail merchants of the products. The access permitted each merchant can be further limited to the information relating to their own products, i.e., merchants cannot gain access to information relating to other merchants' products. In addition, functions and privileges available to a database administrator are not generally available to the merchants.

A database can be accessed over a network such as a Local Area Network (LAN). A LAN typically supports a small number of clients at a given time. LANs are limited to a small number of clients because LAN applications typically require frequent and continuous communications between the clients and servers. These continuous communications between clients and servers on LAN networks enable both clients and servers to continually monitor each others' states. These systems are tightly coupled, i.e., the duration of a communication between a server and a client often lasts for the entire database session. Clients that communicate to a server for the entire duration of the database session are known as "fat" clients. The hardware and software limitations of a given LAN will restrict the number of these fat clients that can access the database at a given time. Accordingly, systems for accessing databases over LANs scale poorly. Scalability is the capacity to substantially maintain or improve system performance as the number of system (or amount of system activity) users increases.

A database can also be accessed over a network of "thin" clients. In contrast to fat clients, which communicate to the server for the entire duration of the database session, a thin client communicates to the server only for a portion of the database session. An example of such a network is the World Wide Web. Usually, thin clients communicate to the server only for the duration of the database transaction. Thin clients advantageously require less hardware and software resources than fat clients. Accordingly, databases accessible on networks of thin clients are highly scalable. Networks of thin clients are stateless. In a stateless network, the client and server are loosely coupled, i.e., they are only certain of each others' state when the client and server are actually communicating with each other.

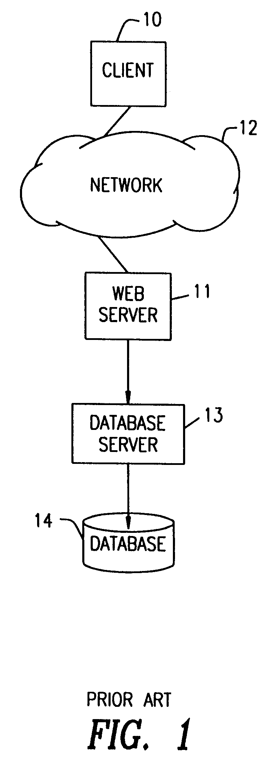

It is desirable to maximize the scalability of database applications on networks while securely restricting access to the database to authorized users. Known scalable methods of securely accessing a database over a network are typified by those available on the World Wide Web on the Internet. As shown in FIG. 1, a client 10 and web server 11 are both coupled to a network 12. Web server 11 is coupled to a database server 13, which is connected to a database 14. In other known systems, the connections between the web server 11 and the database server 13 are through the network 12, or through a LAN. The blocks in FIG 1 that refer to the client 10, web server 11, database server 13 and database 14 indicate software rather than hardware components. Thus, for example, the database server 13 and the web server 11 can be executed on a single computer.

At the client's request, a socket connection is formed between the client 10 and the web server 11. Client 10 and web server 11 each have an Internet Protocol (IP) address and a series of ports that are identified by a 16-bit value, known as the port number. A socket is the unique combination of port number and IP address. A socket connection is formed by a pair of sockets: one socket on the client 10 and one socket on the web server 11. Data is exchanged between client 10 and web server 11 through the socket connection. A standard socket connection is one that implements standard ports for particular-applications. Standard socket connections are described in J.K. Reynolds and J.B. Postel, Assigned Numbers, RFC 1060, March 1990. For example, TELNET, a standard protocol, uses port number 23. A nonstandard, or proprietary, socket connection is one that uses a port not associated with a standard application, or uses a standard port for a nonstandard application.

Although the socket connection exists for the duration of the session, the client 10 and web server 11 only communicate to each other for the time it takes to send a database request and receive the database results. The client 10 and web server 11 are said to be loosely coupled.

To access the database server 13, the client 10 sends a database request to the web server 11 through the socket connection. The database request is a command to search or modify the information stored in the database 14. Examples of database requests include commands or procedures such as query, insert, delete, or modify. The web server 11 then interprets the database request, submits the database request to the database server 13, which interacts with the database 14. Database server 13 sends the results to web server 11, which then sends the database result to the client 10 through the standard socket connection.

In another known configuration, the user accessing the client 10 must first be identified and authenticated by the web server 11 before the information from the database server 14 can be accessed. Typically, a user identifies herself by entering a unique user identification code into the client 10. The user identification code is sent from the client 10 through the standard socket connection to the Web server 11. In one known authentication method, the user is authenticated by entering a password into the client 10. Each unique user identification code corresponds to a password. The password is either assigned to or selected by the user. The password is sent from the client 10 through the standard socket connection to the web server 11. If the password corresponds to the user identification code on web server 11, then the user is allowed to access database 14 through web server 11.

Known techniques for accessing a database over a network have several shortcomings. Without an authentication mechanism, a user can access the database 14 through the Web server 11 once the network address or location of the Web server 11 is known. On the World Wide Web, a network location is designated by its Uniform Resource Location (URL). Once the network location is known, the user need only establish a standard socket connection between the client 10 and the Web server 11. The socket connection can be established using widely-available network interfaces, such as browsers. Users can read, alter or delete information in database 14 without limitation, which can substantially degrade the quality of the database 14, and/or make it unavailable to other users.

In a system that uses identification and authentication codes, the user must memorize her user identification code and password. Passwords are notoriously unsecure. Users often select simple passwords that are easy to remember. These passwords can be easily guessed by an unauthorized user. Further, users often forget their passwords, causing them to lose access to the database until the password can be replaced. The unique combination of a user identification code and password can be vulnerable to compromise. Users often record their user identification code and password in fixed form such as written media. Unauthorized users may gain access to the database by merely viewing the recorded user identification code and password. Once the user identification code and password are compromised, unauthorized users can access and compromise or damage the data stored in database 14. Further, access codes can be misappropriated by third parties monitoring the communications between client 10 and web server 11.

Yet another disadvantage of known systems is that access to database 14 by authorized users can unmediated. Thus, even an authorized user can send commands to read, alter or delete data from database 14; these commands may be erroneous. Such erroneous commands can substantially damage the database 14. Access codes mediating access to the database 14 can be sent from client 10 to web server 11, but these are subject to compromise.

A further problem occurs when a user with authorization attempts to subvert the database 14, either by reading another user's private data, or altering or deleting data improperly. For example, several competitors sharing a database 14 may find it advantageous to learn about each others' businesses and alter the information relied upon by a competitor in making business decisions. A more secure system for accessing a database 14 would mediate access to the database even for authorized users.

A superior system and method for accessing a database over a network would be scalable, and would protect the integrity and confidentiality of data stored in the database by securely mediating access to the database. The access controls would prevent unauthorized users from accessing the database and prevent authorized users from carrying out unauthorized database operations. This would be carried out in an environment that is easy to understand and use for the user, while maintaining a high level of system performance.

### SUMMARY OF THE INVENTION

In accordance with one embodiment of the present invention, a system is provided for securely accessing a database that includes a web server coupled to a client over a network, a transaction server coupled to the client over the network, and a database server coupled to the transaction server. The client, executing instructions loaded on the client from the Web server, sends a request to the transaction server to establish a socket connection between the client and the transaction server. This can be a standard or nonstandard socket connection. The socket connection is established, and the transaction server advantageously implements security features that identify and authenticate the requesting user. Once the user is authenticated, the transaction server sends an appropriate graphical user interface (GUI) to the client through which the user sends and receives database transaction data (i.e., database requests and responses). The GUI is selected based upon the identity of the user. In one embodiment, the GUI is dynamically generated. In another embodiment, the GUI is selected from a predetermined set of GUIs. If the user is not authenticated, the socket connection is terminated, effectively refusing the unauthenticated user access to the database. Along with the GUI, the transaction server generates and sends a session identification code that accompanies all further user database requests from the client.

The user interacts with the GUI to formulate a user database request with values, which is sent from the client to the transaction server over the socket connection. An example of user database request values is "Stickley" and "Super Parka II" in a request for the price of a product by manufacturer and product name. The database request from the client is sent using a simple messaging protocol, and advantageously need not be in a form executable by the database server (e.g., it need not be in SQL format).

The transaction server receives the user database request and selects an action statement that corresponds to the request. The action statement generally has parameters. For example, an action statement can be a parameterized statement that searches a database for the price a product made by X and named Y. X and Y are parameters in such an action statement. A pseudo-code example of such a statement is:
GET_PRICE:MANUFACTURER_NAME(X),PRODUCT_NAME(Y).

The transaction server then evaluates the parameterized action statement by replacing the parameters with the user database request values. A pseudo-code example of an evaluated action statement is:
GET_PRICE FOR MANUFACTURER_NAME(Stickley),
PRODUCT_NAME(Super Parka II).

The evaluated request, which is readable by a database server, is carried out on the database and a result is returned. In this way, the transaction server advantageously mediates access to the database, logically and securely separating the user and client from the database. The result of the database request from the database server is sent to the client.

In one embodiment of the present invention, the transaction server verifies the database results prior to transmitting the database request.

In yet another embodiment, the security of the present invention is further enhanced by implementing access controls (e.g., a user id and password system) between the transaction server and the database server.

The present invention provides to a scalable user-friendly system with superior security features for accessing a database over a network.

### BRIEF DESCRIPTION OF THE DRAWINGS

FIG 1 shows a known system for accessing a database over the World Wide Web.

FIG 2 shows an embodiment of a transaction server in accordance with the present invention.

FIG 3 shows an embodiment of a system in which the transaction server is employed in accordance with the present invention.

FIG 4 is a flow chart representation of receiving and processing a client request for service in accordance with the present invention.

FIG 5 is a flow chart representation of receiving and processing a user database request from an initialized user in accordance with the present invention.

### DETAILED DESCRIPTION

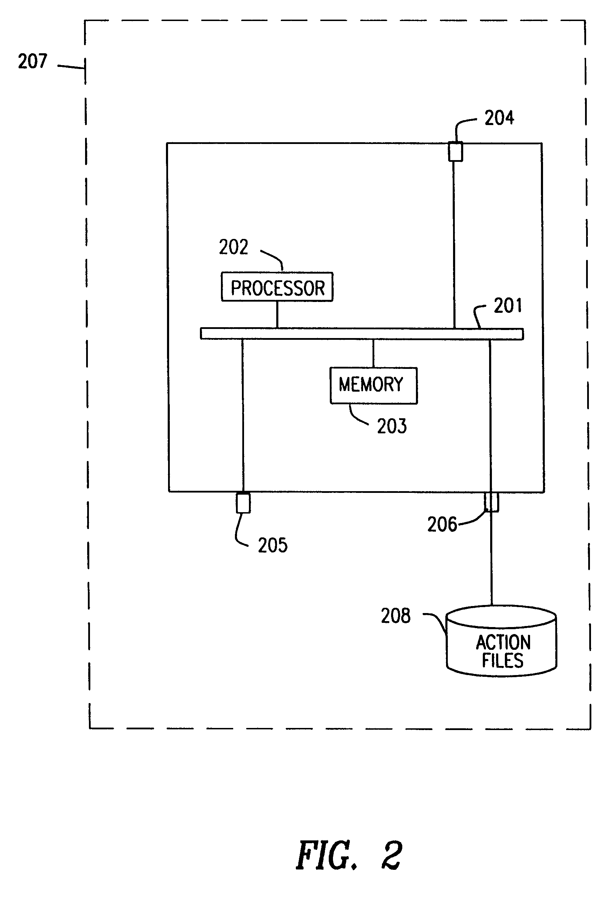

An embodiment of the apparatus in accordance with the present invention is shown in FIG 2, which shows a transaction server 207. The transaction server 207 comprises a data bus 201 that connects a processor 202; computer readable memory 203; a port 204 to be connected to a network; a port 205 to be connected to a database server 205; and a port 206 to be connected to computer readable storage device that includes action files 208.

Action files include action statements comprised of predefined database commands (e.g., queries, modifications, etc.) that have formal parameters which are dynamically substituted with values supplied by a user. In the embodiment shown in FIG 2, the action files are stored on a peripheral memory device (e.g., a hard disk) at the transaction server. However, the action files can be stored at any location in accordance with the present invention, provided the action files are available to the transaction server. For example, the action files in one embodiment are stored on a database accessed by the transaction server. In another embodiment, the action files are stored on a server connected to the network. In this embodiment, the transaction server obtains action files through the port 204 that is connected to the network.

An action file contains action statements, each of which has a unique label and a body. The label serves to uniquely identify a statement, and is generally a single line in length. In one embodiment, the body of the action statement consists of several lines, but the last line of every statement ends with a line delimiter. Any ASCII character can be used as the line delimiter. In one embodiment, the semi-colon symbol ";" is used as the delimiter. A position parameter, such as the "@" symbol, can be placed anywhere in the body of the statement. Each position parameter indicates a formal parameter whose value is typically supplied by a user before the statement is submitted to act on a database.

An example of an action statement that retrieves information is the following:

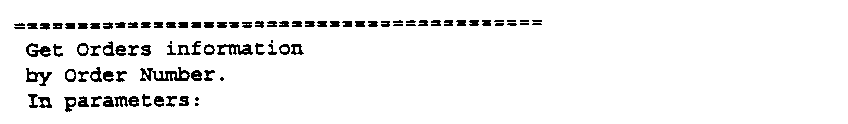

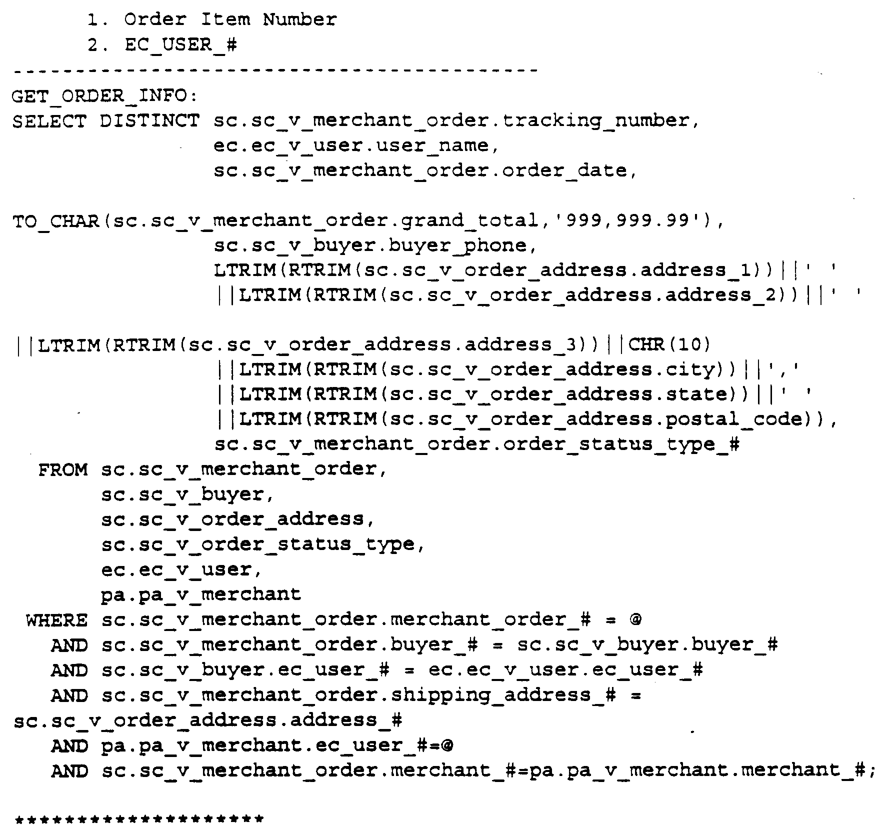

This parameterized action statement obtains order information from a database using an order number and an electronic commerce user number. The label for this parameterized action statement is "GET_ORDER_INFO:" (the text preceding the label consists of comments.) The body of the action statement is listed after the label and ends with a ";" symbol. The two parameters (Order Item Number and EC_USER_#) are both represented by the "@" symbol.

The transaction server receives a user database request (e.g., a request for order information for order no. 38475 from a user with an electronic commerce user number 324), searches for the statement with the given label, retrieves the body of the statement, and evaluates the statement by replacing the parameters of the statement with the user database request values. The transaction server then passes the ready-to-execute statement to a database server. The database server carries out the statement, and sends the results (e.g., order information) to the transaction server. These results are sent from the transaction server to the client.

An example of an action statement that modifies a database is as follows:

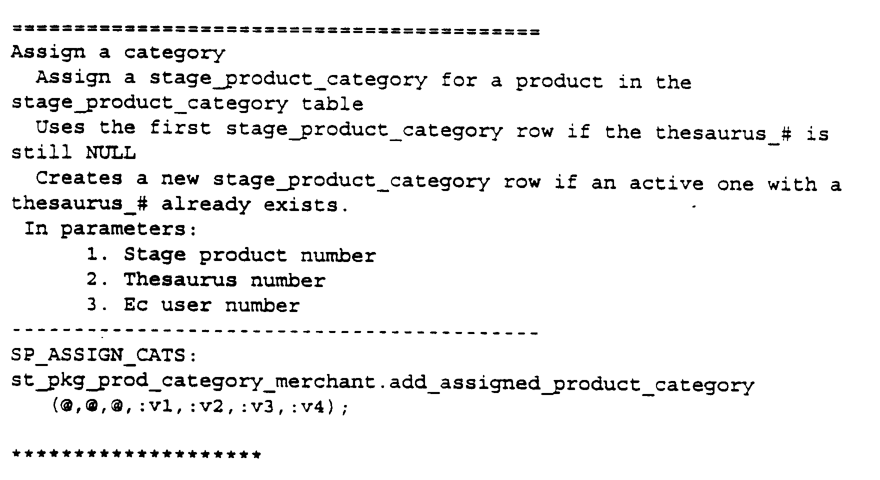

This parameterized action statement receives a request from a user with an electronic commerce user number (Ec user number) to assign a product category name (Thesaurus number) to a product (Stage product number.) In this example, the label for the stored procedure statement is "SP_ASSIGN_CATS:" Comments are included in the text before the label, and the body of the action statement occurs after the label. The three parameters (Ec user number, Thesaurus number and Stage product number) are each represented by the "@" symbol.

In accordance with the present invention, a user with an electronic commerce user number sends a user database request from the client to the transaction server to assign a product category name to a product. For example, the user (with electronic commerce number 324) requests the product category "Jackets" be assigned to a product called the "Super Parka II." The transaction server selects the action statement above, and the three parameters in the action statement are replaced with the values in the user database request.

The evaluated action statement is sent to the database server, which carries the statement out on the database. The results (e.g., indicating success or an error) are sent to the transaction server, which forwards a results message to the client. These results are displayed to the user through the GUI on the client.

Another advantageous feature of the action statements in accordance with the present invention are action statement attributes that can advantageously modify the behavior of the transaction server. A pseudo-code example of an action statement attribute is as follows:
GET_PRICE:PRODUCT_NAME(X),MODEL_NUMBER(Y),FORMAT(X,Y,PRICE ),SEARCH_MODEL_NUMBER(X,?),STORE_QUERY_HISTORY(X,Y,PRICE).
This action statement has three attributes. The first, FORMAT(X,Y,PRICE) specifies that the results should be presented to the user in accordance with a predetermined format with the product name first, then the model number, and finally the price. The second attribute, SEARCH_MODEL_NUMBER(X,?) invokes another action statement that search for the model numbers for a given product name if the model number is not submitted by the user, and returns a list of the model numbers to the user. The user can then advantageously select a desired model number. The third attribute, STORE_QUERY_HISTORY(PRICE,X,Y) stores the price, product name and model number in a query history file that is used to determine system performance and the identity of the most requested items of information. This is useful in making caching decisions, for example. These three examples of action statement attributes (a format attribute, a pointer to another action statement, and a store attribute) illustrate the utility of such attributes.

Attributes can be used to modify the behavior of the transaction server, database gateway, database drivers or database server in any useful way. A database gateway is an interface between the transaction server and a database server. For example, attributes can link an action statement to a particular database, modify the type of connection between the transaction server and database server, or specify additional security measures to be taken when the evaluated action statement is carried out.

The transaction server uses the action files to advantageously logically separate a user from a database. This allows the user to access one or more databases through an easy-to-use GUI without having to learn or understand database commands or languages. A user submits a database request through an easy-to-use graphical user interface (GUI) at a client. The values provided by the user through the client database request are substituted into appropriately selected action files understandable by a database server and carried out. The results are sent to the client for presentation to the user through the GUI.

Another advantage of logically separating the user from the database is enhanced security. By preventing the user from directly accessing the database, the confidentiality and integrity of the database can be advantageously controlled.

Yet another advantage of using a transaction server and action files in accordance with the present invention is flexibility. The action files can be changed and tailored to specific databases and database commands and languages transparently to the user. Thus, changes in database hardware and software do not incur any expense whatever to the user, who need not learn new ways to access needed data.

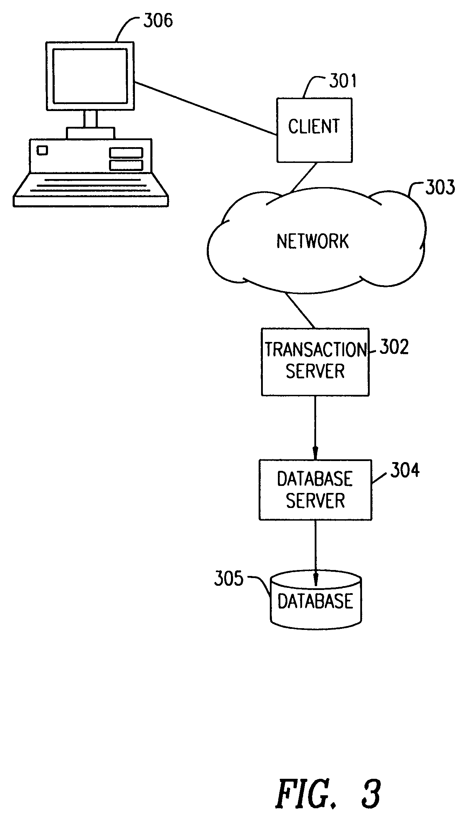

An embodiment of a system in accordance with the present invention is shown in Fig. 3. Client 301 and transaction server 302 are connected to network 303. The transaction server 302 is coupled to a database server 304, which is in turn coupled to a database 305. In another embodiment (not shown) transaction server is connected to database server 304 (which is in turn connected to database 305) through network 303. In yet another embodiment of the present invention, no separate database server 304 is employed. Rather, the transaction server 302 executes a software program that enables the transaction server 302 itself to interact directly with the database 305 (e.g., carry out queries and modifications on the database) without the need for a separate database server 304. The boxes representing the client 301, transaction server 302, database server 304 and database 305 refer to the software rather than the hardware needed to carry out the functions of each. Thus, for example, transaction server 302 and database server 304 can be carried out on the same computer.

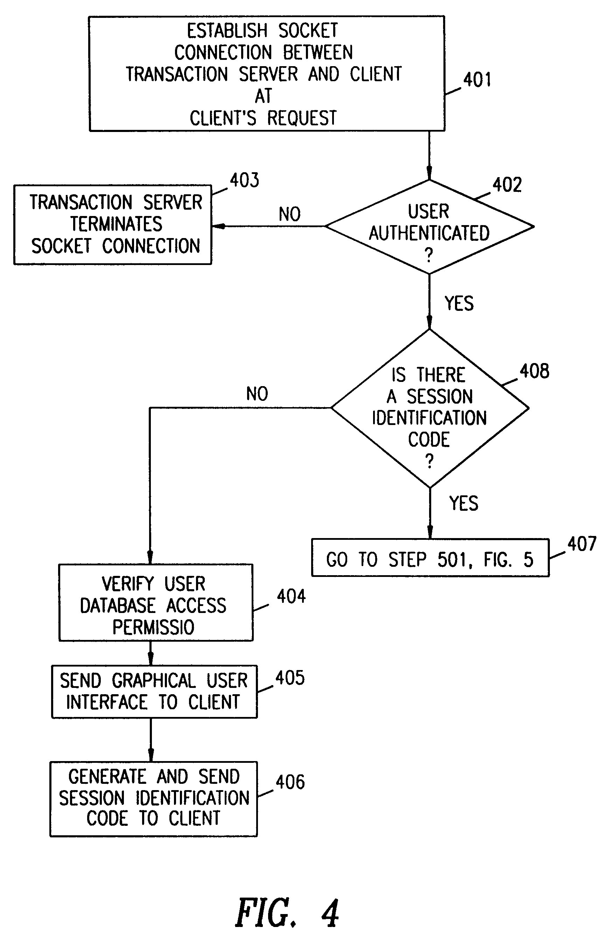

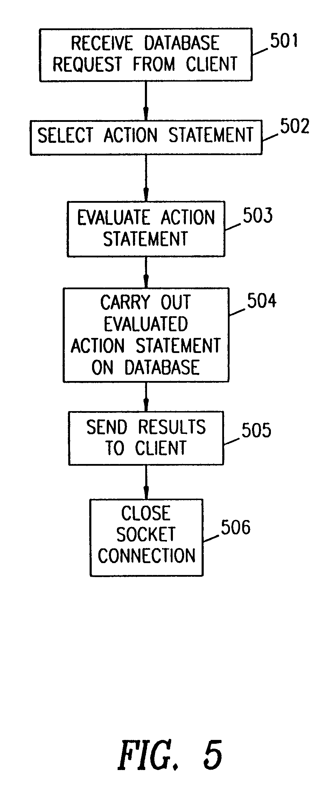

The system shown in FIG 3 operates in accordance with the method of the present invention shown in FIGs 4 and 5. FIG 4 a procedure in accordance with the present invention that takes place when the client sends a request to the transaction server to establishes a socket connection. FIG 5 shows a method in accordance with the present invention whereby once a session is initialized, the transaction server receives and processes a session user database request.

In step 401 of FIG 4, a socket connection is established between the client and the transaction server at the client's request. Client software is obtained and loaded on the client in order to enable the client to interact with the transaction server.

In one embodiment, a user 306 (FIG 3) obtains the client software through known distribution methods (e.g., on computer readable memory through the Postal Service, on computer bulletin boards, etc.) and installs it on the client 301. In another embodiment, the user obtains the software from a server (not shown) connected to the network 303 (e.g., via file transfer protocol (FTP)). In yet another embodiment, the user obtains the client software by executing a known hypertext browser (such as the Netscape Navigator from the Netscape Communications Company, the Internet Explorer from the Microsoft Company of Washington, etc.), and retrieving a hypertext page from the transaction server. The hypertext page from the transaction server includes Java applet that enables the user to establish a socket connection between the client and the transaction server. Thus, the transaction software can be a stand-alone program, plug-ins designed to operate in conjunction with a known browser, a Java applet associated with a hypertext file obtained from the transaction server (302 in FIG 3), or any other executable software program.

Next, the transaction server attempts to authenticate the user in step 402. A user is authenticated when the identity of the user and the user's permission to access the transaction server are verified. Authentication data can be carried between the client and transaction server using a simple messaging protocol. An embodiment of a simple messaging protocol in accordance with the present invention is described below. If the user cannot be authenticated, the socket connection is terminated by the transaction server 403. If the user is authenticated, the transaction server consults a cache table to determine if the user has already been assigned a session identification code 408. If the user has already been assigned a session identification code, the present request is part of a user session that has already been initialized. In this case, the method shown in FIG 5 is next followed 407, starting with step 501.

If the user has not yet been assigned a session identification code, then the transaction server carries out the session initialization procedure shown in steps 404, 405 and 406. In step 404, the transaction server verifies the user's database access permissions.

Verifying the database access permissions of an authenticated user is carried out in one embodiment of the present invention when the transaction server consults database access permission stored in a table cross-indexed with the user's user id. In one embodiment, the access permission indicates the type of user (e.g., merchant, system administrator, etc.) Each user type is associated with certain predetermined database access permissions. For example, a user of type "merchant" is allowed only to read certain records such as historical records (sales trends) and records pertaining to manufacturers price lists. The merchant user is allowed to both read and modify records pertaining to his own inventory (e.g., change merchandise descriptions, record sales, orders, etc.) On the other hand, a user of type "administrator" is allowed to read and modify system administration records, but is not allowed to read or modify merchant records.

In another embodiment of the present invention, the database access permission for each user indicates the types of actions that user is allowed to take with respect to the database. Such permission indicates record or types of record and the action with respect to each that the user may take (e.g., read, modify, etc.) In this way, the present invention advantageously mediates access to a database by users, enhancing system security.

Once the access permissions of an authenticated user are verified, the transaction server sends an appropriate GUI to the user's client 405. In one embodiment of the present invention, the GUI is dynamically generated. In another embodiment, the GUI is selected from a predetermined set of GUIs. The GUI sent to the user is said to "comport" with the user's database access permission when the GUI provides an interface that only allows user to formulate user database requests within the scope of the user's database access permission. Thus, for example, a user who is authorized to read historical sales data and read and modify order information, but who is unauthorized to read or modify system administration data is provided with a GUI having known GUI features (buttons, text boxes, icons, etc.) that support only the user's authorized access. In this case, the user is able to read historical sales data using a combination of buttons and pull down menus, and read and modify order information using a combination of buttons and text boxes. However, there is no provision in the user's GUI for reading or modifying system administration data. In this way, the present invention advantageously enforces a user's access permissions simply and economically.

The transaction server also generates and sends a session identification code to the client 406. The session identification code is correlated with the identity of the user (e.g., the user id) at the transaction server, and is used to identify data exchanged between the transaction server and the client for the rest of the session. In one embodiment of the present invention, the session identification code is the same as the user id. A session is defined as the period of activity from the time the session identification code is sent to the client until the time the client terminates the session through the GUI, or the user loses authentication, or the socket connection is unexpectedly terminated, or any other event occurs that requires the user to be newly authenticated and a new GUI and/or session identification code be sent to the client. Once the steps in FIG 4 have been completed, the session initialization procedure is complete and the user can send database requests from the client to the transaction server, which are processed in accordance with the method shown in FIG 5.

After receiving the session identification code during the session initialization process, the client sends the code with every user database request to the transaction server. The session identification code advantageously allows the transaction server to keep track of data to and from each client even in a stateless environment such as the Internet.

FIG 5 shows a method in accordance with the present invention whereby the transaction server processes a user database request. In step 501, a user database request is received at the transaction server from the client. An example of a user database request is a request for ordering information for a product (i.e., the number of units of a given product ordered during a certain period of time) submitted by a user through a GUI on a client.

The database request is sent using a simple messaging protocol. One embodiment of the simple messaging protocol consists of a finite number of tokens separated by delimiters and ending in a message delimiter. In the present embodiment there are N tokens, where N is an integer equal to the number of positioned parameters in the statement plus three. The generic format of a database request of N tokens is as follows: 〈token 1〉 〈dlm〉〈token 2〉〈dlm〉 . . . 〈token N 〉. Here, "〈dlm〉" represents the token delimiter. Any ASCII character or combination of ASCII characters can be used for the token delimiter, but it is important that the character of combination thereof not inadvertently activate, modify, or interfere with the actual or intended meaning of a database request. A preferred-embodiment uses an uncommon character or combination for the delimiter. For example, one preferred embodiment uses the ASCII character that signifies a "registered trademark", i.e., "®" is used as a token delimiter.

The simple messaging protocol can be used to authenticate the client. Before the client is authenticated, the first token value of a message has a value of zero. Messages whose first tokens are zero carry information needed to authenticate the client to the transaction server. After the client's identity and privilege to access the transaction server are verified, the first token of each message from the client to the transaction server has the value of the session identification code. The second position parameter, 〈token 2〉, is a boolean flag to indicate the type of statement. In one embodiment, a backslash "\" character indicates that the statement is a stored procedure command and a null character indicates that the statement is a SQL command. The third token, "〈token 3〉", is the unique label of the statement. Subsequent tokens are positioned parameters for the corresponding statement. The number of the these tokens should match the number of positioned variables in a statement.

An example of a database request in accordance with the present invention is: "merchant1234®\® topseller®10®1996". The session identification code is "merchant1234". The token delimiter, the registered trademark symbol, separates the first token from the second token. The second token, the backslash, indicates that the database request is a stored procedure request. The third token, "topseller", indicates the label of the statement. The fourth and fifth tokens are positioned parameters that are variables in the statement. The scored procedure "topseller" may search the database for a merchants top selling products in a given year. The fourth token may indicate how many of the top selling products will be displayed. The fifth token may indicate the year. In the instant example, the database request asks the transaction server to return the top ten sellers in 1996.

In step 502, the transaction server parses the database request and identifies the action statement corresponding to the user database request. In this embodiment, the first token, the session identification code, identifies the client submitting the request and the session. The second token, the boolean action file flag, identifies the type of action file that is to be accessed. The third token, the statement label, identifies the action statement (from the appropriate action file) that corresponds to the user database request. In step 503, the transaction server evaluates the selected action statement by replacing parameters in the action statement with values from the user database request.

In step 504, the evaluated action statement is carried out on the database. In step 505, a message is sent from the transaction server to the client indicating the results of carrying out the evaluated action statement on the database (e.g., query results, modification results, error codes, etc.) The message includes appropriate GUI control signals that cause the GUI at the client to display these results to the user.

In one embodiment of the present invention, an additional layer of security is interposed between the transaction server and the database using database access codes (e.g., database user ids and passwords). Such access codes are internal to the transaction server, and are advantageously invisible and inaccessible to users, thus enhancing their security. Each database access code (e.g., user id and corresponding password) has a corresponding access permission. For example, when the transaction server logs in to the database server with a user id and password, the database server will only carry out evaluated action statements that comport with the access permission associated with that user id and password. This advantageously provides another security feature between the database and users. The user id and password selected by the transaction server for an evaluated action statement is based upon the access permission of the user making the corresponding database request. For example, when the transaction server has evaluated an action statement based upon a database request from a merchant, the transaction server selects the user id "merchant" and the corresponding password "b832rf" to log in to the database. The database access permission corresponding to "merchant" and "b832rf" matches the access permission of a user identified as a merchant, determined in step 404 of FIG 4. The use of database access codes further enhances the security of the present invention. For example, if a user were able to circumvent the controls imposed by the user's GUI and submit a database request to modify a record in an unauthorized fashion, the database user id and password system would prevent such unauthorized modification.

In step 506, the socket connection is closed between the client and the transaction server.

Due to the stateless network environment in which the present invention operates, each user request for service must be analyzed to determine if it is part of a session that has already been initiated, or if a new session has to be started (e.g., as shown in FIG 4). This process is shown in FIG 6. A socket connection is established at the user's request 601. If the transaction server cannot authenticate the user, then the socket connection is terminated 602. If the transaction server authenticates the user, then the transaction server searches a cache table for the user and a corresponding session identification code 603. If no session identification code is found, then the initialization process shown in FIG 4 is carried out 604 starting with step 404. If a session identification code is found, then the database request process shown in FIG 5 is carried out 605 starting with step 501.

This stateless mode of communication between the client and the transaction server advantageously allows the present invention to scale well. Large numbers of users are easily accommodated by the present invention by maintaining a connection only for the duration of a single database request and reporting of the results. This minimizes the burden placed on the transaction server and database server by each user. The present invention is thus more advantageously efficient than known, less scalable systems that maintain an open connection between a client and server during several database requests.

When the client software is implemented on the client as a Java applet embedded in an HTML file, the applet has two major threads. The first thread processes input from the user, and the second thread communicates with the transaction server. The second thread sends database requests to the transaction server in accordance with the simple messaging protocol, and monitors responses from the transaction server. The applet on the client also verifies every user input for possible errors before initiating a new transaction with the transaction server, advantageously preventing the transaction server from being unnecessarily burdened by being asked to process an erroneous user request. For example, user request with a date range input by a user where the year is outside a predetermined range (e.g., outside the range 1980-1998) is checked and rejected by the client software, which does not open a socket connection with the transaction server until an acceptable date is input by the user.

The use of action files advantageously logically separates the client transaction software from the database schema. By modifying the contents of the action file, it is possible to customize the functionality of the transaction software without having to change the transaction software. A user executing a transaction software Java applet on the client need not understand the structure of the database, the SQL language, or the names of stored procedures and their parameters. All database queries are carried out by the database server based upon instructions derived from the action files selected by the transaction server to carry out a validated database request from an authenticated client. This advantageously provides both flexibility and security in carrying out database queries from clients. In known systems, security is typically provided at the expense of functionality, performance and/or flexibility. The present invention advantageously provides security with enhanced functionality, performance and flexibility.

Security is provided in accordance with the present invention by authenticating (i.e., verifying the identity and access permissions of) a user and/or client, and logically separating the transaction software used by the client to interact with the database from the database itself. Enhanced functionality, performance and flexibility are provided in accordance with the present invention by the ease with which system functionality and performance can be tailored to meet the needs of a particular client or environment by changing the contents of the action files. The action files can advantageously be changed without requiring any changes to the transaction software implemented on the client. Likewise, the action files, being substantially independent from the database server, can be easily modified to accommodate different database server languages, protocols, and platforms. This can be advantageously carried economically and easily without having to modify the software of the transaction server.

The flexibility of the present invention is further enhanced because the user need not learn nor understand complex database languages to access the database. An easy-to-use GUI that can be tailored to the meet the needs of an individual user is provided to the client from a web server or from a transaction server that includes web server functionality.

The present invention is advantageously scalable because it operates in a stateless environment, establishing a separate socket connection for each user database request. This makes the most efficient use of the transaction and database servers, and enables the system in accordance with the present invention to efficiently process requests from a large body of users.

The present invention provides an efficient, secure, flexible and scalable way to provide database services to users on a network.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A secure and scalable system for carrying out database transactions for a user with a client connected to a network, comprising a transaction server with an action file containing an action statement, said transaction server connected to the network, a database server connected to the transaction server, and a database connected to the database server, wherein said transaction server authenticates a user, determines the database access permission of the user, sends a graphical user interface that comports with the database access permission of the user to the user's client, receives a user database request with values provided by the user through the graphical user interface on the user's client, selects and evaluates an action statement corresponding to the user database request and sends said action statement to said database server, and wherein said database server carries out said evaluated action statement on said database and sends the results to said transaction server, and wherein said transaction server sends a message indicating the results to the client and the results are displayed to the user on said graphical user interface.

2. The system of claim 1, wherein said evaluated action statement is sent to said database server with a database access code having a corresponding database access permission equivalent to the database access permission of the user, said database server carrying out said evaluated action statement on said database only if said evaluated action statement comports with said database access permission corresponding to said database access code.

3. A scalable method for carrying out secure database transactions over a network socket connection for a user with a client connected to the network, comprising the steps of:
a. authenticating the user;
b. determining the database access permission of the user;
c. sending a graphical user interface that comports with the database access permission of the user to the client;
d. receiving a user database request containing user values from the client;
e. selecting an action statement from an action file based upon the user database request;
f. evaluating the selected action statement using user values;
g. using the evaluated action statement to carry out a database action;
h. receiving the results of the database action; and
i. sending results of the database action to the client.

4. The method of claim 3, wherein using the evaluated action statement to carry out a database action comprises the steps of:
a. sending the evaluated action statement with a database access code to a database server, the database access code determining a database access permission that is equivalent to the database access permission of the user;
b. carrying out the evaluated action statement on the database with the database server if the evaluated action statement is permitted by the database access permission determined by the database code; and
c. sending an error message from the database server to the transaction server if the evaluated action statement is not permitted by the database access permission determined by the database code.

5. A transaction server that provides secure database transactions to users over a network, comprising a processor, computer readable memory, a port to be connected to a network, a port to be connected to a database and an action file containing an action statement that is selected and evaluated by said transaction server in response to a database request received from a client with a user.

6. The transaction server of claim 5, wherein said action file is stored in said computer readable memory; or
further comprising a port to be connected to an external computer readable memory device that stores said action file; or
wherein said transaction server authenticates a user and determines the database access permission of the user; or
wherein said transaction server sends to the client a graphical user interface that comports with the database access permission of the user; or
wherein said evaluated action statement is executed on said database and said transaction server sends results of the executed action statement to the user.

7. The transaction server of claim 5, wherein said action statement comprises a command to retrieve or modify data stored in said database.

8. The transaction server of claim 7, wherein said action statement further comprises a formal parameter that is replaced by a value supplied by a user, evaluating said action statement; or
wherein said action statement further comprises an attribute that modifies the behavior of the transaction server.

9. A scalable method for carrying out secure database transactions for an authenticated user with a client through a network socket connection between a transaction server and the user's client, comprising the steps of:
a. selecting an action statement based upon a user database request containing values received at the transaction server from the client;
b. evaluating the action statement using the values contained in the user database request; and
c. carrying out the evaluated action statement on a database.

10. The method of claim 9, further comprising the steps of determining the database access permission of the user and sending to the client a graphical user interface that comports with; the database access permission of the user; and/or
further comprising the step of sending the results of executing the evaluated action statement on the database to the client.

11. The method of claims 9 or 10, wherein the selected action statement contains formal parameters and the selected action statement is evaluated when values contained in the user database request replace formal parameters of the selected action statement; and/or
wherein the selected action statement is a database query; and/or
wherein the selected action statement is a database modifier.

12. The method of one or more of claim 9-11, wherein carrying out the evaluated action statement on a database comprises the steps of:
a. sending the evaluated action statement with a database access code to a database server, the database access code determining a database access permission that is equivalent to the access permission of the user;
b. carrying out the evaluated action statement on the database with the database server if the evaluated action statement is permitted by the database access permission determined by the database code; and
c. sending an error message from the database server to the transaction server if the evaluated action statement is not permitted by the database access permission determined by the database code.

13. A transaction server with computer readable medium for carrying out secure database transactions for an authenticated user through a network socket connection between said transaction server and a client of the user, said computer readable medium having a computer program encoded thereon, comprising:
a. a first portion of said medium having a first program segment for selecting an action statement containing formal parameters based upon a user database request containing values received at the transaction server from the client;
b. a second portion of said medium having a second program segment for evaluating the action statement by replacing formal parameters contained in the action statement with values contained in the user database request; and
c. a third portion of said medium having a third program segment executing the evaluated action statement on a database.

14. The transaction server of claim 13, further comprising a fourth portion of said medium having a fourth program segment for determining the database access permission of a user and sending a graphical user interface that comports with the database access permission of the user from the transaction server to the client; or
further comprising a fourth portion of said medium having a fourth program segment for sending the results of carrying out the evaluated action statement on the database to the client.

15. A scalable system for carrying out secure database transactions for a authenticated user connected through a client to a network, comprising:
a. means for authenticating the user;
b. means for selecting and evaluating an action statement using a user database request;
c. a database;
d. means for executing an evaluated action statement on said database;
e. means for sending the results of executing the action statement on the database to the client.

16. The system of claim 15, further comprising means for determining the database access permission of a user and sending a graphical user interface that comports with the database access permission of the user to the client.
